# EUROPEAN PATENT APPLICATION

(11) **EP 4 002 613 A1**
(43) Date of publication of application: **25.05.2022**
(21) Application number: 20208867.0
(22) Date of filing: 20.11.2020
(51) Int. Cl.: H02B 3/00

(54) **AN ELECTRICAL SWITCHBOARD FOR ELECTRIC POWER DRISTRUBUTION GRIDS**

(71) Applicant: ABB Schweiz AG, 5400 Baden (CH)
(72) Inventor: Di Maio, Luciano, I-20162 Milano (MI) (IT); Ghezzi, Luca, I-21013 Gallarate (MI) (IT)
(74) Representative: De Bortoli, Eros

(57) **Abstract**

An electrical switchboard (1) for electric power distribution grids, said switchboard including:
- a cabinet structure (10) having one or more outer walls (11) defining an inner volume (110) of said electric switchboard;
- a plurality of electric or electronic devices (12) arranged in the inner volume of said electrical switchboard, said electric or electronic devices being configured to control the operation of at least a portion of an electric power distribution grid;

The electrical switchboard comprises a user-interface system (100) configured to allow a user to interact with said electric or electronic devices (12), said user-interface system comprising:
- a display assembly (2) configured to display visual information (90) related to the operation of said electric or electronic devices (12) on a display surface (20A, 11A) at an outer wall (11) of said cabinet structure;
- a controller (3) operatively coupled to said display assembly (2) and said electric or electronic devices (12) and configured to control the operation of said display assembly (2) in such a way that said display assembly displays said visual information (90) and a user is allowed to interact with the electric or electronic devices (12) of said electrical switchboard through said display assembly.

## Description

The present invention relates to an electrical switchboard for electric power distribution grids, in particular for low-voltage or medium-voltage electric systems.

Electrical switchboards for electric power distribution grids generally comprise a cabinet accommodating electric or electronic devices (e.g. switching devices, meters, sensors, relays, and the like) adapted to control the operation of a given portion of electric power distribution grid.

As is known, in traditional electrical switchboards, a user has necessarily to open the cabinet door in order to interact (e.g. read data or provide input data or commands) with the electric or electronic devices of the switchboard through their user interfaces.

The experience has proven how such a course of action may be rather uncomfortable (e.g. due to an unfavourable position of the electric or electronic devices) or dangerous (e.g. due to the proximity of live parts of the electrical switchboard).

In addition, since electric or electronic devices of the switchboard are normally provided with user interfaces having small displays (e.g. of few cm²), the interaction with these devices may be rather difficult. Obviously, this may lead to a waste of time and a loss of efficiency during the interventions on the electrical switchboard.

The main aim of the present invention is to provide an electrical switchboard that allows overcoming the drawbacks of the known art.

Within this aim, a purpose of the present invention is to provide an electrical switchboard which allows a user to interact in a comfortable and safe way with the embedded electric or electronic devices.

A further purpose of the present invention is to provide an electrical switchboard, which allows interacting with the installed electric or electronic devices in an easy and efficient way. A further purpose of the present invention is to provide an electrical switchboard, which is relatively simple and cheap to be manufactured at industrial levels.

The above aim and purposes, as well as other purposes that will emerge clearly from the following description and attached drawings, are provided, according to the invention, by an electrical switchboard for electric power distribution grids, according to the following claim 1 and the related dependent claims.

In a general definition, the electrical switchboard, according to the invention, comprises:
- a cabinet structure having one or more outer walls defining an inner volume of the electric switchboard;
- a plurality of electric or electronic devices arranged in the inner volume of the electrical switchboard, said electric or electronic devices being configured to control the operation of at least a portion of an electric power distribution grid.

The electrical switchboard of the invention comprises a user-interface system configured to allow a user to interact with said electric or electronic devices.

According to the invention, said user-interface system comprises:
- a display assembly configured to display visual information related to the operation of said electric or electronic devices on a display surface at an outer wall of said cabinet structure, preferably at the door of said cabinet structure;
- a controller operatively coupled to said display assembly and said electric or electronic devices and configured to control the operation of said display assembly in such a way that said display assembly displays said visual information and a user can interact with the electric or electronic devices of said electrical switchboard through said display assembly.

Preferably, said display assembly comprises:
- a display unit configured to receive an excitation light and show said visual information on a display surface in response to said excitation light, said display unit being arranged at an outer wall of said cabinet structure, preferably at the door of said cabinet structure, in such a way that said display surface is accessible to a user;
- a light projector operatively coupled to said display unit and said controller. The light projector is configured to provide said excitation light to said display unit under the control of said controller, i.e. basing on display data or commands received from said controller.

Preferably, said display assembly comprises one or more reflecting elements or optical waveguides configured to direct the excitation light emitted by said light projector towards said display unit along a predefined optical path.

According to some embodiments of the invention, said display unit includes first optical means configured to receive said excitation light and display said visual information on a display surface, for example by scattering said excitation light.

According to alternative embodiments of the invention, said display unit includes second optical means configured to receive said excitation light and project said visual information on a display surface of an outer wall of said cabinet structure, for example by refracting said excitation light according to multiple refraction directions.

According to some embodiments of the invention, said display unit is arranged at a transparent portion of an outer wall of said cabinet structure, preferably the cabinet door. Said display unit is configured to display visual information including one or more augmented reality features or holograms, which are visually positioned at or visually superimposed to corresponding electric or electronic devices of said electrical switchboard that can be observed by a user through the transparent portion of said outer wall.

According to some embodiments of the invention, said display assembly comprises a detector operatively coupled to said controller and configured to provide detection data indicative of the physical characteristics of a user. Said controller is configured to control the operation of said light projector basing on said first detection signals in such a way that said display assembly can display said visual information at variable positions, depending on the physical characteristics of the user, such as the user's height.

According to an important aspect of the invention, said display assembly comprises an input user-interface configured to allow a user to provide first input data or commands to said controller.

According to some embodiments of the invention, said input user-interface includes a touch interface, preferably embedded in said display unit.

According to alternative embodiments of the invention, said input user-interface includes a gesture recogniser configured to detect and recognise gestures by a user and provide said first user-input data or commands basing on the recognised gestures of the user.

Further features and advantages of the present invention will be more apparent from the description of preferred but not exclusive embodiments of the present invention, shown by way of examples in the accompanying drawings, wherein:
- Figures 1-4 schematically show an embodiment of the electrical switchboard, according to the invention;
- Figure 5-7 schematically show additional variant embodiments of the electrical switchboard, according to the invention;
- Figures 8-9 schematically show another embodiment of the electrical switchboard, according to the invention;
- Figures 10-11 schematically show another embodiment of the electrical switchboard, according to the invention;
- Figures 12-13 schematically show another embodiment of the electrical switchboard, according to the invention.

With reference to the attached figures, the present invention relates to an electrical switchboard 1 for electric power distribution grids.

The electrical switchboard 1 is particularly adapted for use in low-voltage AC or DC electric systems and it will be described with particular reference to this kind of applications. However, in principle, it may be used also in electric systems of different type, e.g. AC or DC medium-voltage electric systems.

For the purposes of the present invention, the term "low voltage" (LV) relates to operating voltages lower than 1 kV AC and 1.5 kV DC whereas the term "medium voltage" (MV) relates to operating voltages higher than 1 kV up to some tens of kV, e.g. 70 kV AC and 100 kV DC.

The electrical switchboard 1 comprises a cabinet structure 10 having one or more outer walls 11 defining an inner volume 110.

Normally, the cabinet structure 10 has a box-like shape as shown in the cited figures. However, in principle, it may be arranged according to solutions of different type depending on the installation requirements.

Conveniently, the cabinet structure 10 is provided with a door 111 to allow a user to access the inner volume 110 of the switchboard.

The cabinet structure 10 additionally includes inner walls 13 defining suitable internal compartments or cubicles, in which the internal components of the switchboard are accommodated.

The outer and inner walls 11, 13 of the cabinet structure 10 may be made of various materials, for example metal materials or electrically insulating materials.

The electrical switchboard 1 comprises a plurality of electric or electronic devices 12 accommodated in the inner volume 110, conveniently in the internal compartments or cubicles of the cabinet structure.

In general, the electric or electronic devices 12 are configured to control the operation of a section of electric power distribution grid. The electric or electronic devices 12 may therefore include circuit breakers, contactors, disconnectors, meters, sensors, relays, controllers, and possible other components normally used in electrical switchboards.

The electric or electronic devices 12 may be operatively coupled or electrically connected to corresponding electric lines, for example through electric contacts, electric connections or electric busbars.

The electric or electronic devices 12 may be configured to communicate one with another and, possibly, with external electronic devices or computerized systems 200, for example through suitable communication buses or in wireless mode.

In general, the structural components (the outer and inner walls 11, 13 and the door 111) of the cabinet structure and the electric or electronic devices 12 of the electrical switchboard may be realized according to solutions of known type and they will be described hereinafter in relation to the aspects of interest of the invention only, for the sake of brevity.

According to the invention, the electrical switchboard 1 comprises a user-interface system 100 configured to allow a user to interact with the electric or electronic devices 12 of the electrical switchboard.

The user-interface system 100 comprises a display assembly 2 configured to display visual information 90 related to the operation of the electric or electronic devices 12 on a display surface 20A, 11A at an outer wall 11 of the cabinet structure 10, preferably at the door 111. In principle, the visual information 90 shown by the display assembly unit may include information of any type and it may be presented through any graphic user interface, according to the needs. As it is better described in the following, the visual information 90 may include augmented reality features or holograms.

The user-interface system 100 further comprises a controller 3 operatively coupled to the display assembly 2 and to the electric or electronic devices 12.

Preferably, the controller 3 comprises at least a digital processing device, for example a microprocessor, capable of carrying out appropriate software instructions stored in a memory medium to implement the requested functionalities.

The controller 3 is capable of communicating with the electric or electronic devices 12 of the electrical switchboard, which are operatively coupled thereto, through suitable internal communication buses or in a wireless mode, according to local communication protocols of known type (e.g. Ethernet, Fieldbus, or the like).

Preferably, the controller 3 is configured to control the operation of the display assembly 2 by processing operation data or commands D0 received from the electric or electronic devices 12. In this way, trough the user-interface system 100, a user may acquire information directly provided by the electric or electronic devices 12 or acquire information obtained by processing data provided by said devices.

Preferably, the controller 3 is configured to control the operation of the display assembly 2 by processing external data or commands D2 received from the external electronic devices or computerized systems 200. In this way, the controller 3 may offer remote or local connectivity capabilities (for example Internet connectivity capabilities), which may be conveniently exploited by a user for interacting with the electric and electronic devices 12. Preferably, the controller 3 is capable of communicating with external electronic devices or computerized systems 200, which are operatively coupled thereto, in wired or wireless manner according to known remote or proximity communication protocols (e.g. TCP/IP, Bluetooth, Lora, Wi-Fi, Zigbee or the like).

Preferably, the controller 3 is configured to control the operation of the electric or electronic devices 12 by providing suitable control data or commands CC to these latter.

Preferably, the display assembly 2 comprises a display unit 20, 21 configured to receive an excitation light L and show visual information 90 on a display surface 20A, 11A basing on the received excitation light.

The display unit 20, 21 is arranged at an outer wall 11 of the case structure 10 in such a way that the display surface 20A, 11A is easily accessible to a user.

In principle, the display unit 20, 21 may be arranged at any outer wall of the case structure 10. Preferably, however, the display unit 20, 21 is arranged at the door 111 of said case structure. According to some embodiments of the invention, the display unit 20, 21 is configured to display visual information 90 including one or more augmented reality features or holograms visually positioned at or visually superimposed to corresponding electric or electronic devices 12 of the electrical switchboard.

According to these embodiments of the invention, the display unit 20, 21 is conveniently arranged at a transparent portion 111A of an outer wall 11 (preferably the door 111) of the cabinet structure. Such a transparent wall portion 111A is arranged in such a way that a user can observe the electric or electronic devices 12 of the electrical switchboard through said transparent wall portion.

In this way, the position of the augmented reality features or holograms of the visual information 90, displayed by the display unit 20, may tuned depending on the physical position (which is *per se* known) of the electric or electronic devices 12, to which said visual features are referred.

Such augmented features or holograms are therefore shown in proximity or superimposed to the corresponding electric or electronic devices 12 and a user can promptly and intuitively associate the information content of each visual feature to the corresponding electric or electronic device. This allows remarkably improving the efficiency of the interaction with the electric or electronic devices 12 though the user-interface system 100.

Preferably, the display assembly 2 comprises a light projector 22 operatively coupled to the display unit 20, 21 and to the controller 3.

The light projector 22 is configured to provide the excitation light L to the display unit 20, 21 under the control of the controller 3. To this aim, the light projector 22 is adapted to receive suitable display data or commands DD from the controller 3 and provide the excitation light L basing on the above-mentioned display data.

As it will be better apparent from the following, according to some embodiments of the invention, the display assembly 2 comprises one or more light reflecting elements 26 (e.g. mirrors) or optical waveguides 27 (e.g. fibre optic waveguides) configured to direct the excitation light L towards the display unit 20, 21 along a predefined optical path.

Preferably, the user-interface system 100 comprises an input user-interface 20B, 24 configured to allow a user to provide first input data or commands D1 to the controller 3.

Preferably, the controller 3 is configured to provide control data or commands CC to the electric or electronic devices 12 obtained by processing the first input data or commands D1. Through such an input user-interface, the user can directly operate the electric or electronic devices 12 of the electrical switchboard without physically accessing to the internal location where they are installed.

Preferably, the controller 3 is configured to control the operation of the display assembly 2, more particularly of the light projector 22 by processing the first input data or commands D1. As an example, through the above-mentioned input user-interface, a user can easily navigate through suitable graphic menus to interact with the electric or electronic devices 12 of the electrical switchboard.

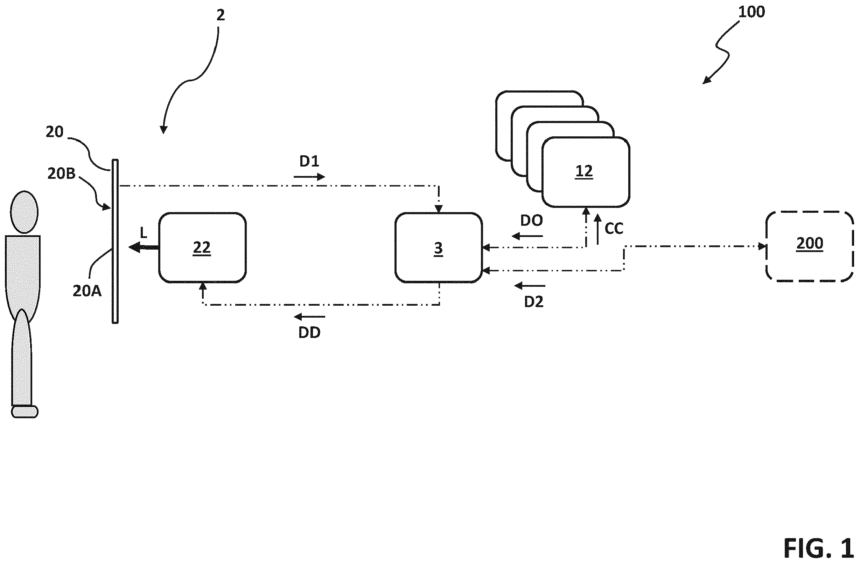

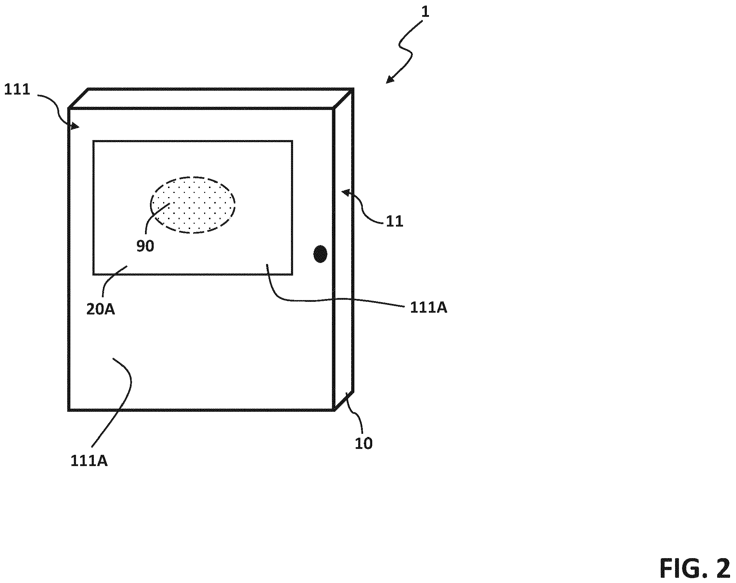

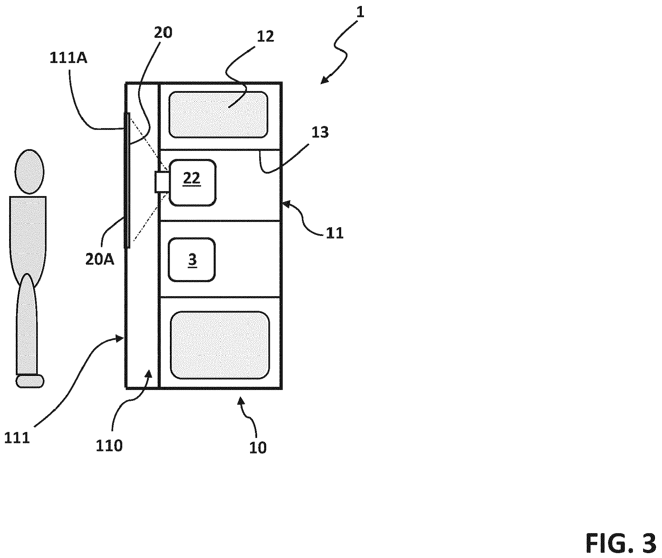

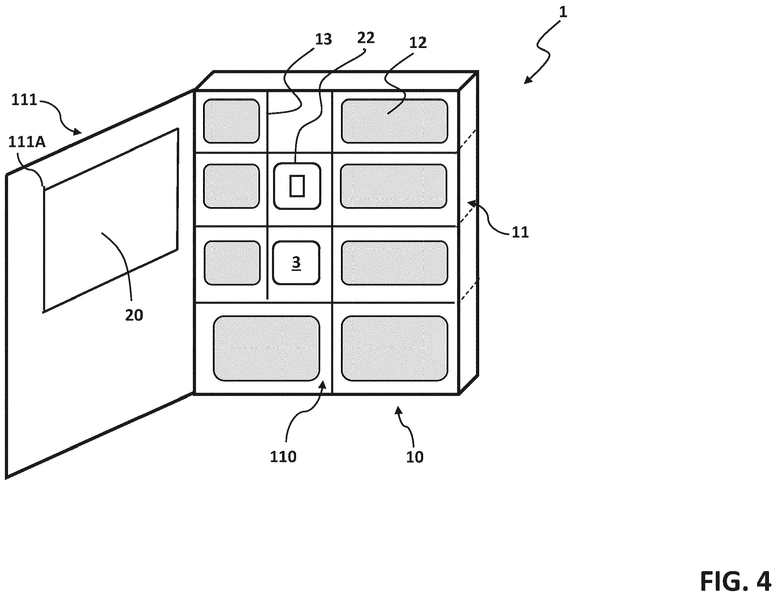

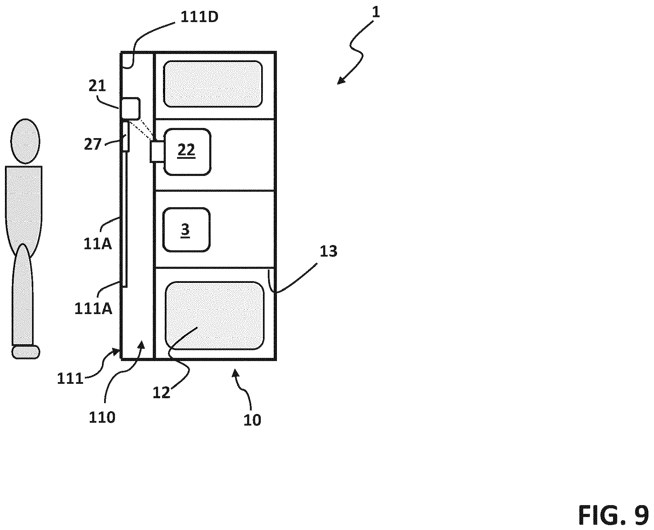

According to some embodiments of the invention (figures 1-9), the above-mentioned display unit includes first optical means 20 configured to receive the excitation light L and display the visual information 90 on a display surface 20A.

Conveniently, the first optical means 20 optically scatter the received excitation light to form the images of the visual information 90.

In general, the first optical means 20 may be on known type.

According to some embodiments of the invention, the first optical means 20 include one or more films or layers of glass or polymeric material, which may be coupled to or buried in an outer wall 11 (preferably the door 111) of the cabinet structure.

Preferably, said films or layers of glass or polymeric material are capable of scattering the received excitation light at predefined wavelengths. As an example, they may be formed or include 405-nm emissive phosphor materials capable of emitting light at different wavelengths (e.g. in the range of blue or green), when excited by a suitable excitation light (e.g. a 405-nm light).

Preferably, said films or layers of glass or polymeric material are of the electro-chromic type, thereby having diffusion indexes tunable by suitable electric fields. Said electric fields may be generated through suitable electrodes excited by corresponding driving voltage signals generated by the controller 3. In this way, said films or layers of glass or polymeric material are capable of scattering the excitation light in all directions, so that the images formed on the display surface 20A are visible from any viewing angle.

Conveniently, multiple films or layers of glass or polymeric material, each of which emits light at a different wavelength (color) when excited by a suitable excitation light at a corresponding wavelength, may be overlapped one to another in such a way to form a multicolor display surface 20A.

Other solutions to realize the first optical means 20 are however available to the skilled person.

Figures 1-4 schematically show an embodiment of the present invention.

According to this solution, the display unit has the first optical means 20 coupled to or embedded in a transparent portion 111A of the door 111 of the cabinet structure.

The display assembly 2 comprises a light projector 22 (e.g. a projector of the DLP - Digital Light Processing - type), which directly projects an excitation light towards the first optical means 20. Conveniently, the light projector 22 is arranged in a suitable compartment located closed to the transparent portion 111A of the door 111.

When illuminated by an excitation light provided by the light projector 22, the first optical means 20 diffuse the received light, thereby forming images at a display surface 20A. These images are visible by a user standing in front of the door 111.

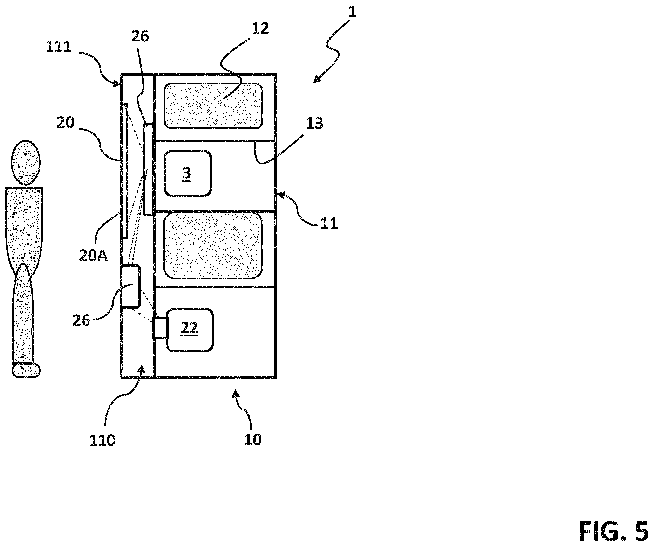

Figure 5 schematically shows an embodiment of the invention, which is similar to that one shown in figures 1-4. In this case, the light projector 22 is arranged in a suitable compartment located in a position relatively distant from the transparent portion 111A of the door 11. The display assembly 2 comprises a plurality of mirrors 26 arranged in such a way to direct the excitation light emitted by the light projector 22 towards the first optical means 20.

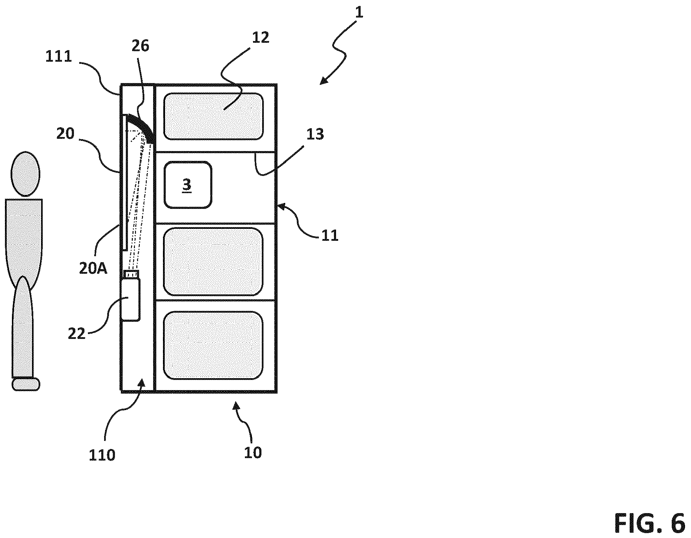

Figure 6 shows an additional variant embodiment of the invention, in which the light projector 22 is mechanically coupled to the door 111 of the cabinet structure 10. Also in this case, the display assembly 2 comprises a plurality of mirrors 26 to direct the excitation light emitted by the light projector 22 towards the first optical means 20 (which is arranged substantially on the same laying plane of the light projector 22).

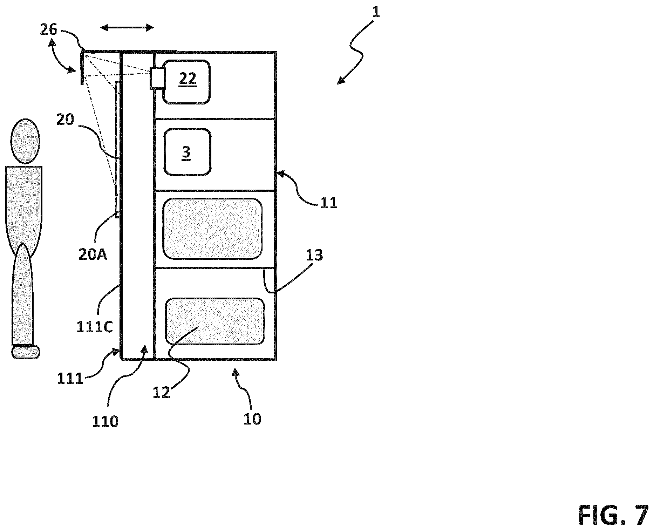

Figure 7 shows another embodiment of the invention, in which the display unit has the first optical means 20 coupled to the external surface 111C of the door 111 (which may be made of a transparent or opaque material) of the cabinet structure.

Preferably, the light projector 22 is located in the internal volume 110 of the electrical switchboard and it projects the excitation light through a suitable opening or transparent portion (not shown) of the door 111.

According to alternative solutions, the light projector 22 may be arranged externally to the cabinet structure, at the external surface 111C of the door 111.

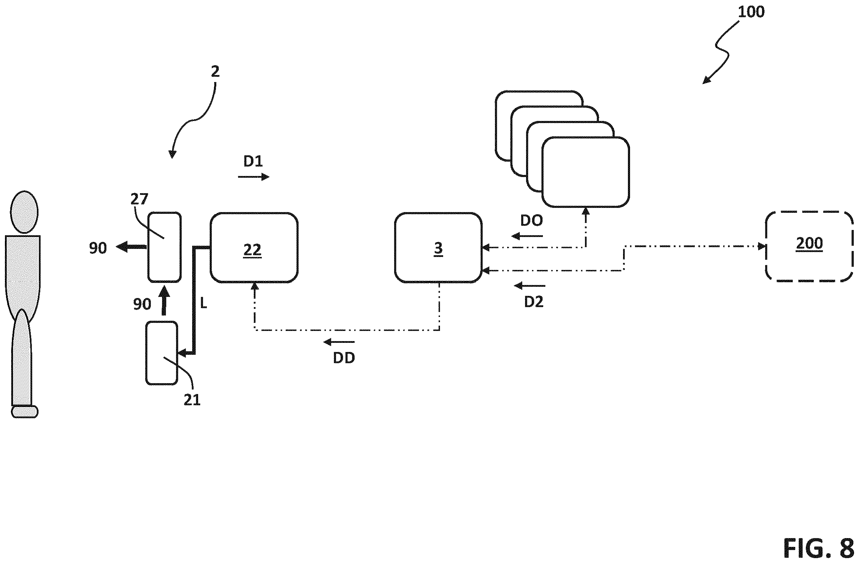

Preferably, the display assembly 2 comprises one or more mirrors 26 protruding externally with respect to the cabinet structure (at the external surface 111C of the door 111) to direct the excitation light emitted by the light projector 22 towards the first optical means 20. Preferably, the mirrors 26 are movable (according to one or more motion axes) by suitable actuating means of known type (not shown) driven by the controller 3. Conveniently, the mirrors 26 can be moved with suitable roto-translational movements between a rest position, which is taken when the light projector 22 is inactive, and a reflection position, which is taken when the light projector 22 projects an excitation light towards the first optical means 20. According to embodiments of the invention (figures 8-9), which are alternative to those presented above, the above-mentioned display unit includes second optical means 21 configured to receive the excitation light L provided by the light projector 22 and project visual information 90 on a display surface 11A of an outer wall 11 (preferably the door 111) of the cabinet structure.

In general, the second optical means 21 may be on known type.

According to some embodiments of the invention, the second optical means 21 include an optical prism made of a material having variable refraction indexes capable of refracting the excitation light according to a predefined direction.

Other solutions to realize the second optical means 21 are however available to the skilled person.

Figures 8-9 schematically show an embodiment of the invention, in which the display assembly 2 comprises the second optical means 21 coupled to the internal surface 111D of the door 111 of the cabinet structure.

The display assembly 2 comprises a light projector 22 (e.g. of the DLP type) projecting an excitation light L towards the second optical means 21, possibly by means of suitable mirrors or optical waveguides (not shown).

When it is illuminated by an excitation light provided by the light projector 22, the second optical means 21 project images of the visual media content 90 along a predefined projection direction.

Conveniently, the second optical means 21 projects these images (preferably by means of a suitable waveguide 27) on a display surface 11A of a transparent portion 111A of the door 11 of the cabinet structure. In this way, said images are visible by a user standing in front of the door 111.

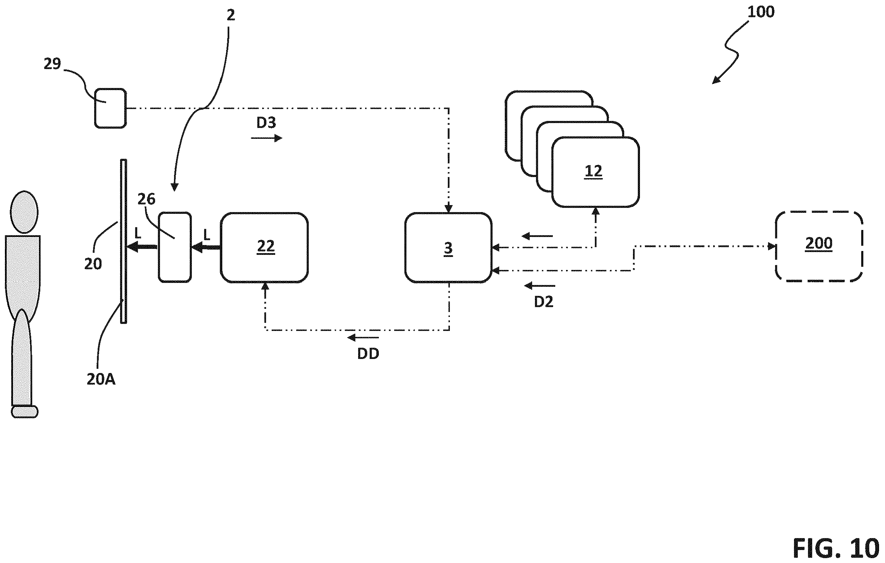

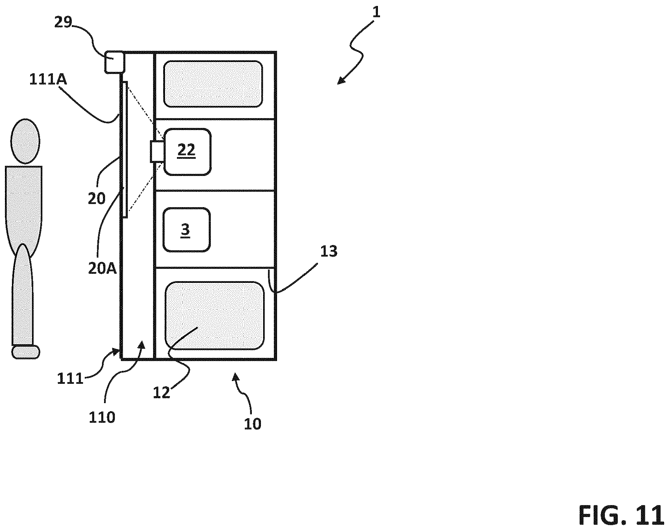

According to some embodiments of the invention (figures 10-11), the display assembly 2 comprises a detector 29 (e.g. a micro radar sensor realized according to solutions of known type) operatively coupled to the controller 3 and configured to provide detection data D3 indicative of the physical characteristics of a user to the controller 3.

The controller 3 is conveniently configured to control the operation of the display assembly 2 (namely of the light projector 22) basing on the detection data D3 in such a way to vary the position, in which the visual information 90 is displayed on the display surface 20A, 11A, depending on the physical characteristics (e.g. the actual height) of the user.

This solution is quite advantageous as it allows a user to interact with the electric or electronic devices 12 in a more comfortable and more efficient manner.

As mentioned above, the user-interface system 100 may comprise an input user-interface configured to allow a user to provide first input data or commands D1 to the controller 3. According to some embodiments of the invention (figure 1), such an input user-interface includes a touch interface 20B.

Conveniently, the touch interface 20B (which may be realized according to solutions of known type) is configured to provide the first user-input data or commands D1 basing on the spots or keys (e.g. presented in a virtual manner through a suitable graphic user interface) touched by the user.

Preferably, the touch interface 20B is embedded in the display unit 20. As an example, it may be formed by a touch screen interface included in the display unit 20.

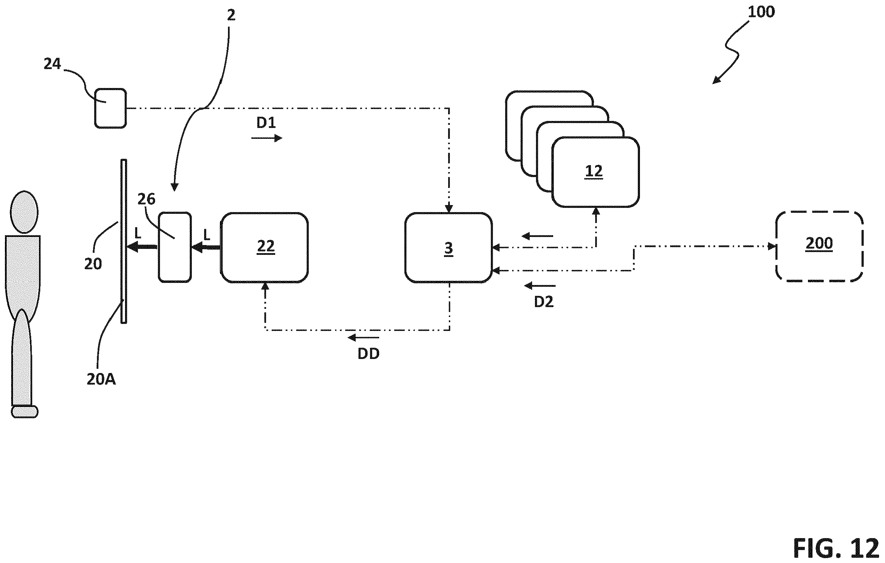

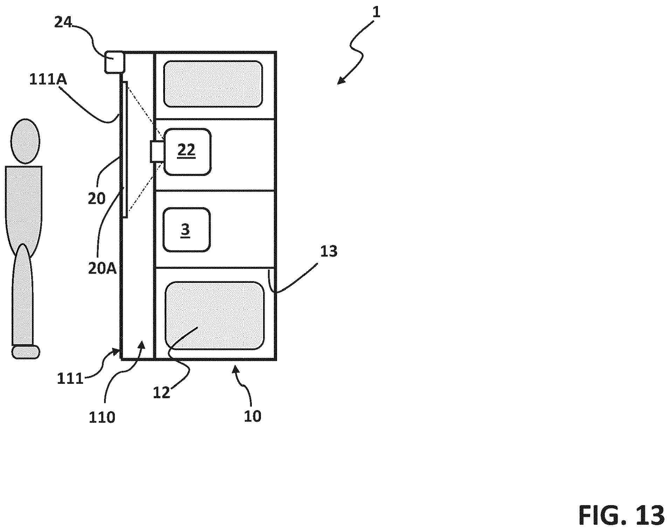

According to other embodiments of the invention (figures 12-13), the above-mentioned input user-interface includes a gesture recogniser 24 (e.g. a radar sensor realized according to solutions of known type) configured to detect and recognise suitable gestures by a user (e.g. using his/her hands) and provide the first user-input data or commands D1 to the controller 3 basing on the recognised gestures of the user.

This solution is quite advantageous as it allows a user to interact with the electric or electronic devices 12 without touching any part of the electrical switchboard (contactless user interface). The electrical switchboard, according to the invention, provides relevant advantages with respect to corresponding known solutions of the state of the art.

The user-interface system 100 of the electrical switchboard allows a user to interact in a comfortable and safe way with the electric or electronic devices installed in the switchboard. The user-interface system 100 provides a single HMI having a large display to read data and, possibly, an input user-interface to provide input data or commands.

A user can thus interact with (virtually all) the electric or electronic devices of the switchboard
without physically accessing to these devices, simply by standing in front of an outer wall (preferably the door) of the cabinet structure and therefore being in optimal position to carry out the requested tasks.

Additionally, a user can interact with multiple electric or electronic devices simultaneously, which allows reducing time and costs require for intervening on the electrical switchboard, e.g. for maintenance or data-collecting purposes.

Finally, a user can exploit local or remote connectivity (e.g. Internet or LAN connectivity) with computerized devices or systems, while interacting with the electric or electronic devices of the switchboard, which allows greatly improving efficiency and performances.

The electrical switchboard, according to the invention, is simple and cheap to be manufactured at industrial levels.

The user-interface system 100 may be easily be realized at industrial level and its of relatively easily installation, thereby being particularly adapted for retrofiring purposes.

Since it provides a single centralized multi-purpose HMI, the user-interface system 100 of the invention allows manufacturing the electric or electronic devices of the switchboard with a simplified structure. These devices may, in fact, be realized without an on-board user interface (e.g. without a display). Obviously, this solution may lead to relevant cost savings in manufacturing the electrical switchboard.

## Claims

1. An electrical switchboard (1) for electric power distribution grids, said switchboard including:
- a cabinet structure (10) having one or more outer walls (11) defining an inner volume (110) of said electric switchboard;
- a plurality of electric or electronic devices (12) arranged in the inner volume of said electrical switchboard, said electric or electronic devices being configured to control the operation of a portion of electric power distribution grid;
**characterised in that** it comprises a user-interface system (100) configured to allow a user to interact with said electric or electronic devices (12), said user-interface system comprising:
- a display assembly (2) configured to display visual information (90) related to the operation of said electric or electronic devices (12) on a display surface (20A, 11A) at an outer wall (11) of said cabinet structure;
- a controller (3) operatively coupled to said display assembly (2) and to said electric or electronic devices (12) and configured to control the operation of said display assembly (2) in such a way that said display assembly displays said visual information (90) and a user is allowed to interact with the electric or electronic devices (12) of said electrical switchboard through said display assembly.

2. Electrical switchboard, according to claim 1, **characterised in that** said display assembly (2) comprises:
- a display unit (20, 21) configured to receive an excitation light (L) and display said visual information (90) at a display surface (20A, 11A) in response to receiving said excitation light, said display unit being arranged at an outer wall (102) of said case structure in such a way that said display surface is accessible to a user;
- a light projector (22) operatively coupled to said display unit and said controller (3), said light projector being configured to provide said excitation light (L) to said display unit basing on display data or commands (DD) received from said controller.

3. Electrical switchboard, according to claim 2, **characterised in that** said display assembly (2) comprises one or more reflecting elements (26) or optical waveguides (27) configured to direct the excitation light (L) provided by said light projector (22) towards said display unit (20, 21) along a predefined optical path.

4. Electrical switchboard, according to one of the claims from 2 to 3, **characterised in that** said display unit includes first optical means (20) configured to receive said excitation light (L) and display said visual information (90) on a display surface (20A).

5. Electrical switchboard, according to one of the claims from 2 to 3, **characterised in that** said display unit includes second optical means (21) configured to receive said excitation light (L) and project said visual information (90) on a display surface (11A) of an outer wall (11) of said cabinet structure.

6. Electrical switchboard, according to one of the claims from 2 to 5, **characterised in that** said display unit (20, 21) is arranged at a transparent portion (111A) of an outer wall (111) of said cabinet structure (10), said display unit (20, 21) being configured to display visual information (90) including one or more augmented reality features or holograms visually positioned at or visually superimposed to corresponding electric or electronic devices (12) of said electrical switchboard, which can be observed by a user through said transparent portion (111A).

7. Electrical switchboard, according to one of the previous claims, **characterised in that** said user-interface system (100) includes a detector (29) operatively coupled to said controller (2) and configured to provide detection data (D3) indicative of the physical characteristics of a user, said controller being configured to control the operation of said light projector (22) basing on said detection data (D3) in such a way that said display assembly is capable of displaying said visual information (90) on a display surface (20A, 11A) at variable positions depending on the physical characteristics of the user.

8. Electrical switchboard, according to one or more of the previous claims, **characterised in that** said display assembly (2) comprises an input user-interface (20B, 24) configured to allow a user to provide first input data or commands (D1) to said controller (3).

9. Electrical switchboard, according to claim 8, **characterised in that** said input user-interface includes a touch interface (20B).

10. Electrical switchboard, according to claim 8, **characterised in that** said input user-interface includes a gesture recogniser (24) configured to detect and recognise gestures by a user and provide said first user-input data or commands (D1) basing on the recognised gestures of the user.

11. Electrical switchboard, according to one of the previous claims, **characterised in that** said outer wall (11) is a door (11) of said cabinet structure.
